# EUROPEAN PATENT SPECIFICATION

(11) **EP 3 736 685 B1**
(45) Date of publication and mention of the grant of the patent: **02.07.2025**
(21) Application number: 20172921.7
(22) Date of filing: 05.05.2020
(51) Int. Cl.: G06F 3/16, G10L 15/06, G10L 17/04, G10L 17/22

(54) **DISPLAY APPARATUS AND METHOD FOR CONTROLLING THEREOF**
ANZEIGEVORRICHTUNG UND VERFAHREN ZUR STEUERUNG DAVON
APPAREIL D'AFFICHAGE ET PROCÉDÉ DE COMMANDE

(30) Priority: 08.05.2019 KR 20190053607
(43) Date of publication of application: 11.11.2020
(73) Proprietor: Samsung Electronics Co., Ltd., Suwon-si, Gyeonggi-do 16677 (KR)
(72) Inventor: PARK, Junyong, Suwon-si Gyeonggi-do 16677 (KR); SHIM, Dahye, Suwon-si Gyeonggi-do 16677 (KR); LEE, Youngah, Suwon-si Gyeonggi-do 16677 (KR); SON, Sungdo, Suwon-si Gyeonggi-do 16677 (KR); BAN, Sungdo, Suwon-si Gyeonggi-do 16677 (KR)
(74) Representative: Appleyard Lees IP LLP

(56) References cited:
- US-A1- 2012 130 714
- US-A1- 2016 035 350
- US-A1- 2018 308 492

## Description

### BACKGROUND

### 1. Field

The disclosure relates to a display apparatus and a method for control thereof, and more specifically to a display apparatus generating and providing an utterance sentence in a user voice registration process and a method for controlling thereof.

### 2. Description of Related Art

With the development of electronic technology, various types of electronic products are being developed and distributed. Most of the various types of electronic apparatuses such as TVs, mobile phones, PCs, notebook PCs, PDAs, and set-top boxes are being widely used throughout households.

As use of electronic apparatuses has increased, user needs for more variety of functions have also increased. Accordingly, efforts by manufacturers to satisfy user needs have also intensified, and products with new functions, which were not previously available, are being increasingly developed.

Recently, electronic apparatuses have become controllable through voice commands and voice recognition for user convenience, and a user may be required to establish a corpus by reading a plurality of sentences to register the user voice for accurately recognizing the speaker.

Because users tend to easily experience tediousness as sentences are constructed so that utterances of the same meaning are repeated several times, there is technical necessity for raising user concentration and reducing time required during the voice registration process.

In the related art, US2018/0308492 discusses segment based speaker verification using dynamically generated phrases, US2012/0130714 discusses a system and method for generating challenging utterances for speaker verification, and US2016/0035450 discusses a related electronic apparatus and control method thereof.

### SUMMARY

The disclosure has been devised to solve the above-described problems, and an object of the disclosure is to provide a display apparatus generating an utterance sentence appropriate to circumstance using information on a surrounding environment and information on a user in a process of a user voice registration, and a method of controlling thereof.

The present invention is defined according to the independent claims. Additional features will be appreciated from the dependent claims and the description herein. Any embodiments which are described but which do not fall within the scope of the claims are to be interpreted merely as examples useful for a better understanding of the invention.

### BRIEF DESCRIPTION OF THE DRAWINGS

The above and other aspects, features and advantages of certain embodiments of the disclosure will be more apparent from the following detailed description, taken in conjunction with the accompanying drawings, in which:
FIG. 1 is a diagram of a display apparatus providing utterance sentences generated according to an embodiment of the disclosure;
FIG. 2 is a block diagram illustrating a configuration of a display apparatus according to an embodiment of the disclosure;
FIG. 3 is a block diagram illustrating a configuration of the display apparatus of FIG. 2;
FIG. 4 is a diagram illustrating an artificial intelligence model according to an embodiment of the disclosure;
FIG. 5 is a flowchart illustrating a method of controlling a display apparatus according to an embodiment of the disclosure;
FIG. 6A is a diagram illustrating a UI screen displaying utterance sentences generated according to an embodiment of the disclosure;
FIG. 6B is a diagram illustrating a UI screen displaying utterance sentences generated according to an embodiment of the disclosure;
FIG. 6C is a diagram illustrating a UI screen displaying utterance sentences generated according to an embodiment of the disclosure;
FIG. 6D is a diagram illustrating a UI screen displaying utterance sentences generated according to an embodiment of the disclosure;
FIG. 6E is a diagram illustrating a UI screen displaying utterance sentences generated according to an embodiment of the disclosure;
FIG. 6F is a diagram illustrating a UI screen displaying utterance sentences generated according to an embodiment of the disclosure;
FIG. 6G is a diagram illustrating a UI screen displaying utterance sentences generated according to an embodiment of the disclosure;
FIG. 6H is a diagram illustrating a UI screen displaying utterance sentences generated according to an embodiment of the disclosure;
FIG. 6I is a diagram illustrating a UI screen displaying utterance sentences generated according to an embodiment of the disclosure;
FIG. 7A is a diagram illustrating an embodiment of feedback being provided when user voice corresponding to an utterance sentence is input;
FIG. 7B is a diagram illustrating an embodiment of feedback being provided when user voice corresponding to an utterance sentence is input;
FIG. 7C is a diagram illustrating an embodiment of feedback being provided when user voice corresponding to an utterance sentence is input;
FIG. 8 is a diagram illustrating an embodiment of generating an utterance sentence using received information from an external apparatus;
FIG. 9 is a sequence diagram illustrating an embodiment of generating an utterance sentence using received information from the external apparatus illustrated in FIG. 8;
FIG. 10 is a sequence diagram illustrating an embodiment of generating an utterance sentence in an external apparatus; and
FIG. 11 is a flowchart illustrating a method of generating an utterance sentence when not connected to a network.

### DETAILED DESCRIPTION

Various embodiments of the disclosure will be described below with reference to the attached drawings. However, it should be noted that the various embodiments are not for limiting the scope of the disclosure to a specific embodiment, but should be interpreted to include various modifications, equivalents or alternatives of the embodiments. With respect to the description of the drawings, like reference numerals may be used for like elements.

Expressions such as "include," "may include," "consist of," or "may consist of" are used herein to designate a presence of relevant characteristic (e.g., elements such as a number, a step, an operation, or a component), and not to preclude a presence of an additional characteristic.

In the disclosure, expressions such as "A or B," "at least one of A and/or B," or "one or more of A and/or B" may include all possible combinations of items listed therewith. For example, "A or B," "at least one of A and B," or "at least one of A or B" may refer to all of (1) including at least one of A, (2) including at least one of B, or (3) including at least one of A and at least one of B altogether. Expressions such as "1st" or "first" and "2nd" or "second" may be used to describe various elements regardless of order and/or importance, and may be used to distinguish one element from another element only and not to limit the relevant elements.

When a certain element (e.g., first element) is indicated as being "(operatively or communicatively) coupled with/to" or "connected to" another element (e.g., second element), it is to be understood that the certain element may be directly coupled to another element or may be coupled through another intervening element (for example, third element). Meanwhile, when a certain element (e.g., first element) is indicated as being "directly coupled with/to" or "directly connected to" another element (e.g., second element), it is to be understood that no other intervening element (e.g., third element) may be between the certain element and the another element.

The expression "configured to (or set to)" used herein may be used interchangeably with, for example, "suitable for," "comprising the capacity to," "designed to," "adapted to," "made to," or "capable of." The term "configured to (or set to)" may not necessarily mean "specifically designed to" in a hardware sense. Instead, under some circumstances, the expression "a device configured to" may indicate that the device may perform an action along with another device or component. For example, the phrase "a sub-processor configured to (or set to) perform A, B, and C" may indicate an exclusive processor (e.g., an embedded processor) to perform a relevant action, or a generic-purpose processor (e.g., a central processor (CPU) or application processor (AP)) capable of performing relevant actions by executing one or more software programs stored in a memory device.

The disclosure will be described in detail below with reference to the accompanying drawings.

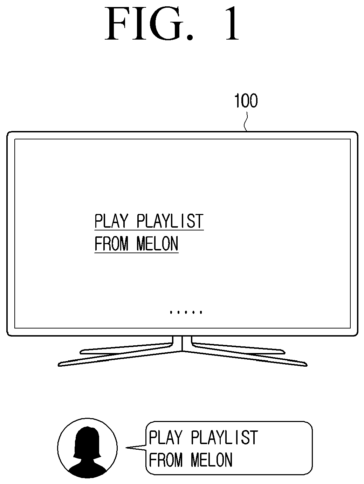

FIG. 1 is a ase diagram of a display apparatus providing utterance sentences generated according to an embodiment of the disclosure.

Referring to FIG. 1, the display apparatus 100 may generate an utterance sentence to register voice of an authenticated user 10. The display apparatus 100 according to the disclosure may at this time generate an utterance sentence according to circumstance when user input for user voice registration is received.

The display apparatus 100 may obtain one or more information on surrounding environment of the display apparatus 100 and information on the authenticated user, and generate an utterance sentence based on the obtained information. The display apparatus 100 may at this time generate a plurality of utterance sentences. The display apparatus 100 may then display the generated utterance sentences.

The display apparatus 100 according to various embodiments may include at least one of, for example, smartphones, tablet personal computers (PCs), mobile phones, video telephones, electronic book readers, desktop PCs, laptop PCs, netbook computers, workstations, servers, personal digital assistants (PDAs), portable multimedia players (PMPs), moving picture experts group phase 1 or phase 2 (MPEG-1 or MPEG-2) audio layer 3 (MP3) players, medical devices, cameras, or wearable devices. Alternatively, the display apparatus 100 may include at least one of a television, a digital video disk (DVD) player, an audio, a refrigerator, an air conditioner, a cleaner, an oven, a microwave oven, a washer, an air purifier, a set-top box, a home automation control panel, a security control panel, an electronic dictionary, an electronic key, a camcorder, or an electronic frame. In addition thereto, electronic devices including a display may also be implemented as the display apparatus 100 of the disclosure.

Even though the electronic apparatus itself does not include a display according to an embodiment, based on being coupled with or connected to a separate display, an operation of the display apparatus 100 may be performed. For example, an electronic apparatus such as a server and a set-top may be coupled with a separate display and collectively perform an operation of the display apparatus 100.

When the user 10 utters a user voice to speak the utterance sentence displayed on the display apparatus 100, the display apparatus 100 may then receive input of uttered user voice through the provided voice input receiver, and obtain voice information of the user based on the input utterance voice.

The display apparatus 100 may display one utterance sentence from the generated plurality of utterance sentences, and repeat an operation of receiving input of user voice by a pre-defined number of iterations. The display apparatus 100 may analyze input user voice on the plurality of utterance sentences, obtain voice information of the user, and store, by matching the voice information to the authenticated user account of the user, the voice information in the memory. If the same user voice is input thereafter, the display apparatus 100 may identify the user account matching the input user voice from the stored plurality of user accounts. Here, the same user voice being input may refer to a user voice with a similarity of a pre-defined value or more being input.

An operation of generating utterance sentence according to circumstance by the display apparatus 100 of the disclosure will be described in greater detail below.

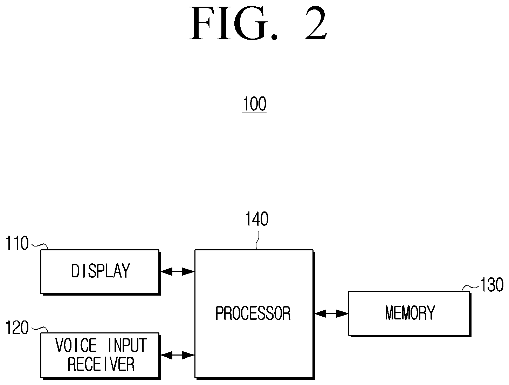

FIG. 2 is a block diagram illustrating a configuration of a display apparatus according to an embodiment of the disclosure.

Referring to FIG. 2, the display apparatus 100 may include a display 110, a voice input receiver 120, a memory 130, and a processor 140. However, the embodiment is not limited to the above-described configuration, and some components may be added or omitted according to the type of the electronic device.

The display 110 may display various information according to a control of the processor 140. The display 110 may display an utterance sentence for the user to speak to perform user voice registration.

Further, based on user voice corresponding to displayed utterance sentence being recognized, the display may provide feedback corresponding to the utterance sentence displayed by the control of the processor 140. For example, the display 110 may provide visual feedback corresponding to the displayed utterance sentence, and display an indicator showing that an auditory feedback is being provided.

According to an embodiment, instructions for executing a function of the display apparatus 100 may be displayed on the display 110 in an utterance sentence, and when user voice corresponding thereto is input, the display 110 may display a screen in which the function displayed in the utterance sentence is performed.

The voice input receiver 120 may be configured for receiving input of user voice being uttered by the user. The voice input receiver 120 may be, for example, a microphone. In this example, the voice input receiver 120 may generate (or convert) a voice or a sound received externally by the control of the processor 140 to an electrical signal. The electrical signal generated from the voice input receiver 120 may be converted by control of the processor 140 and stored in the memory 130.

The voice input receiver 120 may receive voice input through the microphone provided in an external apparatus such as a remote control and an artificial intelligence (AI) speaker. In this example, a communication interface may be implemented to perform the function of the voice input receiver 120.

The memory 130 may store instructions or data for executing or controlling operations of the display apparatus 100. The memory 130 may be implemented as a non-volatile memory, a volatile memory, a flash-memory, a hard disk drive (HDD), or a solid state drive (SSD). The memory 130 may be accessed by the processor 140, and reading/recording/modifying/deleting/renewing or the like of data may be performed by the processor 140. The term memory used herein may include a memory 130, a read-only memory (ROM) within the processor 140, a random access memory (RAM), or a memory card detachably mounted to the display apparatus 100 (e.g., micro secure digital (SD) card, memory stick, etc.). In addition, the memory 130 may store programs, data, and the like for configuring various screens to be displayed in a display area of the display 110.

The memory 130 may include a knowledge database trained by the user using the display apparatus 100. The knowledge database may store the relationship between knowledge information in an ontology form.

In addition, the memory 130 may be further stored with an artificial intelligence model trained based on at least one of user interaction input in the display apparatus 100, search history of user, sensing information sensed by the display apparatus 100, sensing information received from an external apparatus, and user information received from an external apparatus. The artificial intelligence model may learn user propensity, preference, and the like. Based on one or more of sensing information and user information being input to the artificial intelligence model, the artificial intelligence model may predict the function to be used by the user and output instruction for performing the predicted function in utterance sentence.

The artificial intelligence model may be executed by a conventional generic-purpose processor (e.g., CPU) or a separate Al dedicated processor (e.g., graphics processing unit (GPU), etc.).

The processor 140 may be electrically coupled with a display 110, a voice input receiver 120 and memory 130 and control the overall operations and functions of the display apparatus 100. The processor 140 may perform user account authentication by executing at least one instruction stored in the memory 130. For example, the processor 140 may display a login screen, and may either authenticate user account through user identification (ID) and password input through the login screen or authenticate user account through an operation of recognizing fingerprint input through a remote controller, or the like.

Based on user input for user voice registration being received, the processor 140 may then identify the circumstance at the time of receiving user input. The user input for user voice registration may refer to cognitive intervention of the user such as voice input, gesture input, touch input, and select menu through remote controller. Accordingly, rather than the display apparatus 100 unilaterally providing an utterance sentence and the user reading the sentence as displayed, the display apparatus 100 may identify the circumstance based on cognitive intervention of the user and generate an utterance sentence appropriate to the circumstance.

For example, the processor 140 may obtain one or more of information on surrounding environment of the display apparatus 100 and information on the authenticated user based on receiving user input for user voice registration.

The information on the surrounding environment of the display apparatus 100 may be obtained by a sensor 150 provided in the display apparatus 100 or received from an external apparatus. In addition, information on authenticated user may be information stored in the memory 130 of the display apparatus 100 or received from the external apparatus.

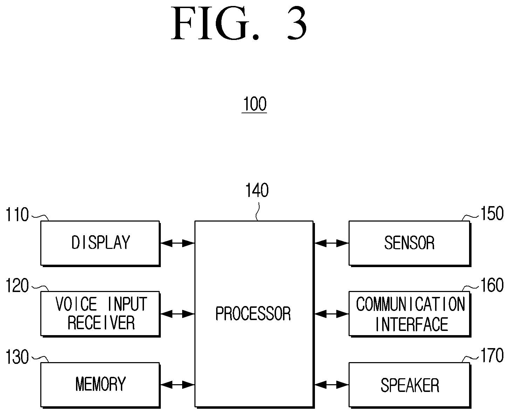

Further, the processor 140 may obtain an utterance sentence based on the obtained information. The processor 140 may generate an utterance sentence based on the obtained information or transmit the obtained information to the external apparatus through the communication interface (reference numeral 160 of FIG. 3), and receive an utterance sentence corresponding to information transmitted from the external apparatus.

According to an embodiment, information on the surrounding environment of the display apparatus 100 may include environmental information such as the country in which the display apparatus is located, the location the display apparatus 100 is disposed in the household, environmental information such as illuminance, temperature, humidity, and color temperature of the space in which the display apparatus 100 is disposed, the external apparatus coupled with the display apparatus 100, and whether a companion animal of the authenticated user is located in the surroundings of the display apparatus 100.

For example, the processor 140 may generate an utterance sentence including an application name being executed in the relevant country based on information on the country in which the display apparatus 100 is located. According to an embodiment, based on the country in which the display apparatus 100 is located being Korea, the processor 140 may generate "play playlist from melon" as an utterance sentence. Alternatively, based on the country in which the display apparatus 100 is located being the United States, the processor 140 may generate "play playlist from Spotify" as an utterance sentence.

According to still another embodiment, the processor 140 may generate an utterance sentence appropriate to the relevant location based on information on the position the display apparatus 100 is disposed in the household. For example, based on the location the display apparatus is disposed being a living room, "turn on news channel," which may be viewed by all family members, may be generated as an utterance sentence. Alternatively, based on the location the display apparatus 100 is disposed being a kitchen, "show spaghetti recipe" related to the kitchen may be generated as an utterance sentence.

According to still another embodiment, the processor 140 may generate an utterance sentence based on the environment information such as illuminance, temperature, humidity, and color temperature of the space the display apparatus 100 is disposed. For example, the processor 140 may generate an utterance sentence such as "adjust screen brightness to lighting brightness" appropriate to the ambiance of the space.

Based on the environmental information of the space the display apparatus 100 is disposed being sensed from the external device, the processor 140 may generate an instruction for controlling the external apparatus as an utterance sentence. For example, based on receiving temperature information from an air conditioner (i.e. external apparatus), the processor 140 may generate an instruction for controlling the air conditioner such as "lower temperature by two degrees" as an utterance sentence. The display apparatus 100 may be, for example, an edge device capable of controlling the external device.

According to still another embodiment, the processor 140 may identify that a companion animal is located in the surroundings of the display apparatus 100 at the time of user voice registration when a sound emitted by the companion animal of the user is recognized through the voice input receiver 120, and generate an utterance sentence related to the companion animal such as "show bathing methods puppies enjoy."

The information on the authenticated user may include user preferred applications, user preferred content, user nationality, and the like. The information on the authenticated user may be obtained by use history of the user stored in the memory 130 or from the external apparatus.

According to an embodiment, the processor 140 may identify a preferred application of the authenticated user and a preferred content of the authenticated user based on user history of the authenticated user. The processor 140 may then generate an utterance sentence including one or more of the identified preferred application name and preferred content name such as "search for mukbang in youtube."

According to still another embodiment, the processor 140 may generate an utterance sentence with the language of the relevant country based on information on the nationality of the authenticated user.

Alternatively, the processor 140 may use the artificial intelligence model stored in the memory 130 to generate an utterance sentence. The processor 140 may input the obtained information to the artificial intelligence model, and obtain a text output from the artificial intelligence model as an utterance sentence.

The artificial intelligence model may predict the function to be executed by the authenticated user based on one or more information of information on the surrounding of the display apparatus 100 and information on the authenticated user, and may be trained to generate an instruction for performing a predicted function as an utterance sentence. The artificial intelligence model may output a text corresponding to the input information from texts of a plurality of stored utterance sentences, and generate and output a text corresponding to the input information.

Although, the above is described as if an utterance sentence is generated based on one information, the utterance sentence may be generated based on two or more information from the obtained information in the actual embodiment. For example, if the location the display apparatus is displayed is a bedroom and based on information on receiving preferred temperature of the user from the external apparatus, the processor 140 may generate an utterance sentence considering both the location and preferred temperature.

Further, the processor 140 may display the generated utterance sentence in the display 110.

Further, when an utterance voice of the user corresponding to the utterance sentence displayed through the voice input receiver 120 is input, voice information of the user based on the input utterance voice may be obtained. For example, the processor 140 may identify the user voice input after displaying the utterance sentence as the voice of the authenticated user, analyze the input voice, and obtain a characteristic of frequency as voice information. The characteristic of frequency may be a frequency form of the input voice. Further, the obtained voice information may be matched to an authenticated user account and stored in the memory 130.

The processor 140 may generate a plurality of utterance sentences based on the obtained various information, and display one utterance sentence from the plurality of utterance sentences in the display 110. Based on a user voice corresponding to the displayed utterance sentence being input, the processor 140 may control the display 110 to display an utterance sentence different from the displayed utterance sentence from the plurality of utterance sentences. The order in which the plurality of utterance sentences is displayed may be random, or may be identified based on a pre-defined priority. The pre-defined priority may be set at the time of manufacturing or by preference of the user.

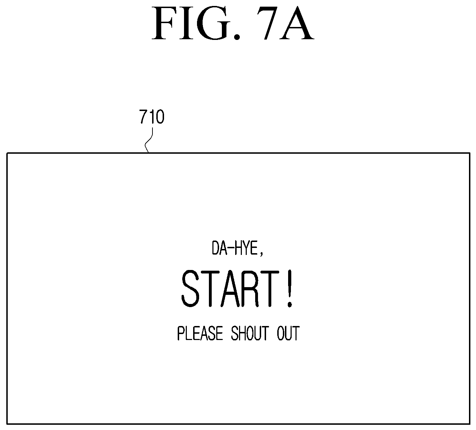

According to an embodiment, the processor 140 may provide one or more visual feedback and auditory feedback related to the utterance sentence based on an utterance voice of the user on the utterance sentence displayed in the display 110 being input through the voice input receiver 120. For example, if "play playlist from melon" is displayed in the display 110 and an utterance voice uttered by the user is input through the voice input receiver 120, the processor 140 may control the display 110 to display a visual feedback related to music based on "melon," which is a music application. The processor 140 may further provide an auditory feedback related to music through a speaker (reference numeral 170 of FIG. 3) and display an indicator indicating that auditory feedback is being provided in the display 110. By providing feedback according to user voice input as above, an effect of raising a cognitive ability of the user and reducing time required for training the language corpus of the user may be expected as the user may be psychologically induced to respond to the sentences. The providing feedback according to user voice input may be described in greater detail below with reference to FIGS. 7A to 7C.

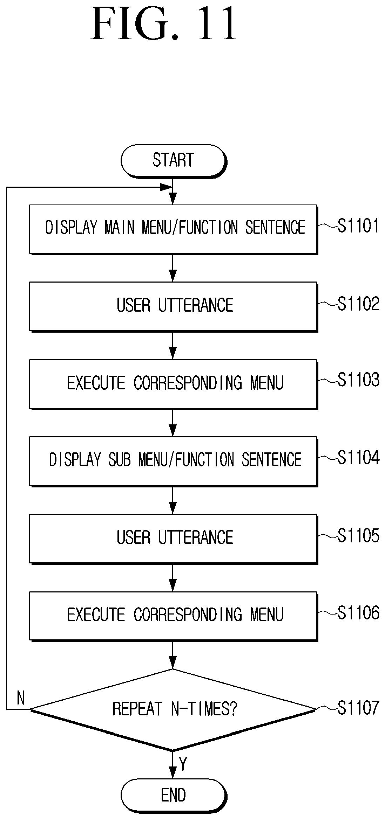

According to an embodiment, the processor 140 may generate an utterance sentence related to a function provided in the display apparatus 100. For example, when not connected with a network, the processor 140 may generate an instruction for executing a function provided in the display apparatus 100 as an utterance sentence. The processor 140 may generate and display an instruction for performing a main function provided in the display apparatus 100 as an utterance sentence, and when a user voice corresponding to the utterance sentence is input, an instruction for performing a sub function may be generated and displayed as an utterance sentence. An embodiment describing the above may be described in greater detail below with reference to FIG. 11.

As described above, by providing an utterance sentence according to circumstance at the time of user voice registration, time required may be reduced by raising user concentration during a registration process of a speaker for speaker recognition.

FIG. 3 is a block diagram illustrating a configuration of the display apparatus of FIG. 2.

Referring to FIG. 3, the display apparatus 100 may include a display 110, a voice input receiver 120, a memory 130, a processor 140, a sensor 150, a communication interface 160, and a speaker 170.

Some configurations of the display 110, the voice input receiver 120, the memory 130, and the processor 140 are the same as the configuration illustrated in FIG. 2, and redundant disclosures are omitted.

The sensor 150 may sense surrounding environment information of the display apparatus 100. For example, the sensor 150 may include a global positioning system (GPS) sensor, a temperature sensor, a humidity sensor, a light sensor, an image sensor, and the like.

The processor 140 may, based on receiving the user input for user voice registration, sense information on a surrounding environment of the display apparatus 100 by the sensor 150, and generate an instruction for controlling the display apparatus 100 based on information on the sensed surrounding environment as an utterance sentence. For example, if the sensor 150 is a light sensor and the surrounding illuminance of the display apparatus 100 is sensed, the processor 140 may generate an utterance sentence such as "adjust screen brightness to adjust for lighting brightness."

The user input for user voice registration may also be received by the sensor 150. For example, if the user input for user voice registration is a gesture, the processor 140 may sense the gesture, which is the user input for user voice registration, through an image sensor.

The communication interface 160 may be a configuration for performing communication with an external apparatus. The communication interface 160 being communication connected with the external device may include communicating through a third device (e.g., a relay device, a hub, an access point, a server or a gateway, etc.). A wireless communication may include a cellular communication using at least one of, for example, long-term evolution (LTE), LTE advance (LTE-A), code division multiple access (CDMA), wideband CDMA (WCDMA), universal mobile telecommunications system (UMTS), wireless broadband (WiBro), or global system for mobile communications (GSM). According to an embodiment, wireless communication may include at least one of, for example, wireless fidelity (WiFi), Bluetooth, Bluetooth low energy (BLE), ZigBee, near field communication (NFC), magnetic secure transmission, radio frequency (RF), or body area network (BAN). Wired communication may include at leat one of, for example, universal serial bus (USB), high definition multimedia interface (HDMI), recommended standard232 (RS-232), low power communication, plain old telephone service (POTS), or the like. The network in which wireless communication or wired communication is performed may include a telecommunication network, for example, at least one of a computer network (e.g., local area network (LAN) or wide area network (WAN)), an internet, or a telephone network.

The processor 140 may, based on the user input for user voice registration being received, obtain information on an external apparatus from the external apparatus coupled through the communication interface 160 or information sensed by the external apparatus. For example, the external apparatus coupled with the display apparatus 100 may be a set-top box, a personal computer (PC), a console gaming device, a USB, an air conditioner, an air purifier, a smartphone, a lighting, and the like. The information on the external apparatus may be information on a type of external apparatus connected to the display apparatus 100.

The information sensed by the external apparatus may refer to information on the surrounding environment of the display apparatus 100 sensed by the sensor provided in the external apparatus coupled with the display apparatus 100 such as an air conditioner and an air purifier.

The processor 140 may generate an instruction for controlling the external apparatus based on information on the external apparatus obtained from the external apparatus or information sensed by the external apparatus as an utterance sentence. For example, based on obtaining temperature information from the air conditioner, which is an external apparatus coupled with the display apparatus 100, the processor 140 may generate an instruction such as "lower temperature by two degrees" for controlling the external apparatus as an utterance sentence, and display the utterance sentence on the display 110.

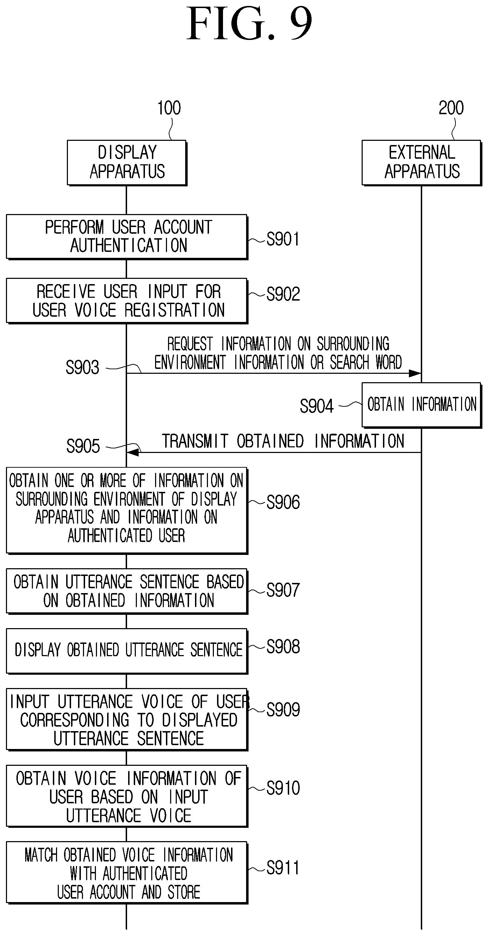

The processor 140 may, based on a control instruction for user voice registration being input, receive information on a search word of which increased number of searches from an external server is equal to or greater than a pre-defined value through the communication interface 160. The external server may be a social network service (SNS) server or a search portal server. According to an embodiment, the processor 140 may identify that a companion animal is located in the surroundings of the display apparatus 100 through crying sounds of the user's companion animal input through the voice input receiver 120, receive information on search word that is becoming a hot topic in real-time from the external server, and generate an utterance sentence such as "show bathing methods puppies enjoy" in case a search word related to the companion animal of the user is present in the received search word information. As described above, the embodiment in which an utterance sentence is generated based on information received from the external apparatus coupled with the display apparatus 100 may be described in greater detail below with reference to FIG. 9.

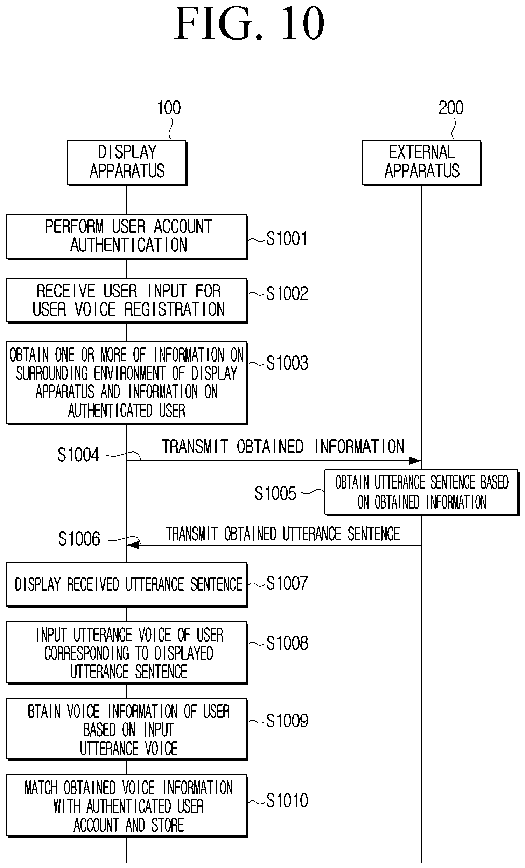

The utterance sentence may be generated by an external server that is not the display apparatus 100. For example, the processor 140 may transmit obtained information on the surrounding environment of the display apparatus 100 and information on the authenticated user to the external server through the communication interface 160, and receive an utterance sentence corresponding to information transmitted from the external server. The utterance sentence received from the external server may be a plurality of utterance sentences. The above may be described in greater detail below with reference to FIG. 10.

The processor 140 may generate a plurality of utterance sentences based on various obtained information, and display one utterance sentence from the plurality of utterance sentences in the display 110. If a user voice corresponding to the displayed utterance sentence is received, the processor 140 may control the display 110 to display an utterance sentence different from the displayed utterance sentence from the plurality of utterance sentences. The order in which the plurality of utterance sentences is displayed may be random or identified based on a pre-defined priority. The pre-defined priority may be priority set at the time of manufacturing or by preference of the user.

The speaker 170 may be a configuration outputting not only various audio data for which various audio processing operations such as decoding, amplification, and noise filtering is performed, but also various notification sounds or voice messages. The speaker 170 may, for example, provide auditory feedback related to utterance sentences to users based on the user voice on the displayed utterance sentence being input. The configuration for outputting audio may be implemented as a speaker, but this is merely one embodiment, and there may also be included an output interface as an output terminal capable of outputting audio data.

Although not illustrated in FIG. 3, the display apparatus 100 according to an embodiment may further include various external input ports for coupling with an external terminal, a button for receiving input of user manipulation, and the like.

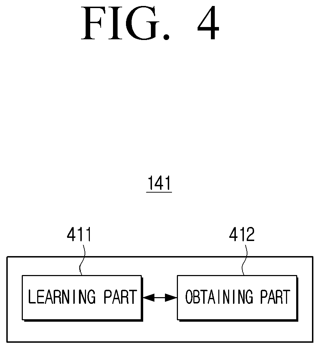

FIG. 4 is a diagram illustrating an artificial intelligence model according to an embodiment of the disclosure.

Referring to FIG. 4, the artificial intelligence model 141 stored in the memory 130 of the display apparatus 100 may include a learning part 411 and an obtaining part 412. Further, the processor 140 may, by executing the learning part 411 stored in the memory 130, predict the function to be executed by the user and may be trained to include a standard for generating a text consisting of an instruction for executing a predicted function. For example, the learning part 411 may obtain propensity information of the user, preference information of the user, or the like based on at least one of the interaction of the user, the search history of the user, the sensed information by the display apparatus, and the user information received from the external apparatus. The learning part 411 may predict the function to be executed by the user based on the obtained user propensity information and preference information, and may be trained to obtain an utterance sentence including the instruction for executing the predicted function.

The processor 140 may, by executing the obtaining part 412 stored in the memory 130, use the trained artificial intelligence model and predict the function to be performed by the user reflecting the user propensity information or preference information from a predetermined input data. The obtaining part 412 may obtain an instruction for executing the predicted function as an utterance sentence, and provide the same as a text.

The obtaining part 412 may obtain a predetermined input data according to a pre-defined standard, and by applying the obtained input data to the artificial intelligence model as an input value, identify (or estimate) a predetermined output based on the predetermined input data. In addition, the resulting value output by applying the obtained input data to the artificial intelligence model may be used to renew the artificial intelligence model.

At least a part of the learning part 411 and at least a part of the obtaining part 412 may be implemented as a software module or manufactured as at least one hardware chip form and loaded in the display apparatus 100. For example, at least one of the learning part and the obtaining part 412 may be manufactured to a hardware chip form dedicated to artificial intelligence (AI), or manufactured as a part of a conventional generic-purpose processor (e.g., CPU or an application processor) or a graphics dedicated processor (e.g., a graphics processing unit (GPU)). The hardware chip dedicated for artificial intelligence may be a processor specialized in probability calculation with a higher parallel processing performance than the conventional generic-purpose processor and may rapidly process calculation in the artificial intelligence field such as machine learning. When the learning part 411 and the obtaining part 412 are implemented as software modules (or program modules including instructions), the software module may be stored in a non-transitory computer readable media readable by a computer. The software module may be executed by an operating system (OS) or by a predetermined application. Alternatively, a part of the software module may be provided by the OS and the remaining part may be provided by the predetermined application.

In addition, the learning part 411 and the obtaining part 412 may be loaded in one server, or loaded to separate servers respectively. For example, one of the learning part 411 and the obtaining part 412 may be included in a first server and a remaining one may be included in a second server. In addition, the learning part 411 and the obtaining part 412 may provide model information constructed by the learning part 411 to the obtaining part 412 through wired communication or wireless communication, and data input to the obtaining part 412 may be provided to the learning part 411 as additional learning data.

In addition, the artificial intelligence model may be constructed considering an application field of the model, learning purpose or computer performance of an apparatus. The artificial intelligence model may, for example, be a model based on a neural network. The artificial intelligence model may be designed to simulate a human brain structure on a computer. The artificial intelligence model may include a plurality of network nodes that simulate neurons in a human neural network and include weighted values. The plurality of network nodes may form a connection relationship for neurons to simulate synaptic activity of sending and receiving signals through synapses. The artificial intelligence model may, for example, include a neural network model or a deep learning model developed from the neural network model. The plurality of network nodes in the deep learning model may be placed at different depths (or, layers) from each other and may send and receive data according to a convolution connection relationship. For example, models such as deep neural network (DNN), recurrent neural network (RNN), bidirectional recurrent deep neural network (BRDNN), and long short term memory network (LSTM) may be used as an artificial intelligence model, but is not limited thereto.

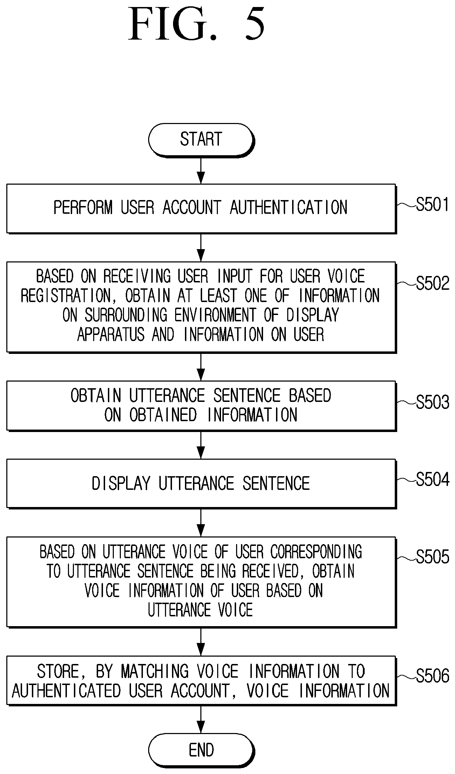

FIG. 5 is a flowchart illustrating a method of controlling a display apparatus according to an embodiment of the disclosure.

Referring to FIG. 5, the display apparatus may first perform user account authentication (S501). The display apparatus may display a login screen, and may either authenticate user account through an identification (ID) and password of the user input through the login screen or authenticate user account through an operation of recognizing fingerprint input through a remote controller, or the like.

Further, when user input for user voice registration is received, the display apparatus may obtain one or more of information on surrounding environment of the display apparatus and information on authenticated user (S502). The user input for user voice registration may refer to cognitive intervention of the user such as voice input, gesture input, touch input, and menu selection through a remote controller.

The display apparatus may obtain one or more information on the surrounding environment of the display apparatus and the information on the authenticated user to identify the circumstance at the time user input is received. Information of the surrounding environment of the display apparatus may be obtained through a sensor provided in the display apparatus or received from the external apparatus. In addition, information of the authenticated user may be stored in the memory of the display apparatus or received from the external apparatus.

Further, the display apparatus may obtain an utterance sentence based on the obtained information (S503). For example, the display apparatus may directly generate an utterance sentence based on the obtained information or transmit the obtained information to the external server, and receive an utterance sentence corresponding to the transmitted information. The obtained utterance sentence may be a plurality of utterance sentences.

Further the display apparatus may display the obtained utterance sentence (S504). The display apparatus may display one utterance sentence from a plurality of utterance sentences. Based on user voice corresponding to the displayed utterance sentence being input, the display apparatus may display an utterance sentence different from the displayed utterance sentence from the plurality of utterances sentences.

When an utterance voice of the user corresponding to the displayed utterance sentence is input, the display apparatus may obtain voice information of user based on input utterance voice (S505). For example, the display apparatus may identify user voice input after displaying the utterance sentence as voice of the authenticated user, and analyze the input voice to obtain a characteristic of frequency such as frequency form as voice information.

The display apparatus may then store, by matching the voice information to the authenticated user account of the user, the voice information (S506).

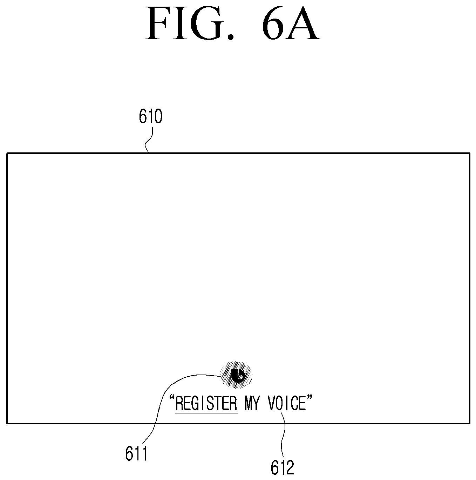

FIGS. 6A to 6I are diagrams illustrating a UI screen displaying utterance sentences generated according to an embodiment of the disclosure.

Referring to FIG. 6A, the display apparatus may display a first UI screen 610 displaying an object 611 indicating that voice recognition operation is being performed. The object 611 indicating that voice recognition operation is being performed may move continuously and indicate that the voice recognition operation is in progress. The object 611 may otherwise be displayed to indicate that voice recognition operation is being performed. Alternatively, other information may be provided on the display to indicate that voice recognition operation is being performed .

When a user utters a voice such as "register my voice," the display apparatus may identify that the user input for user voice registration has been received based on the results of voice recognition. Further, the display apparatus may display a text 612 corresponding to the recognized voice in a first UI screen 610. The authentication on the user account may be in a completed state.

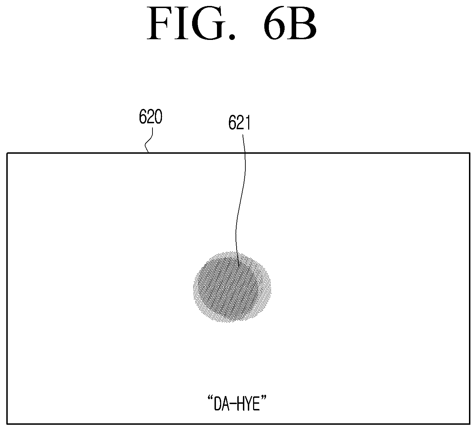

Further, referring to FIG. 6B, the display apparatus may display a second UI screen 620 displaying an object 612 indicating that user voice registration is in in progress. The object 612 indicating that the user voice registration is in progress may move continuously and indicate that the user voice recognition operation is in progress.

The display apparatus may obtain information on the surrounding environment of the display apparatus and information on the authenticated user.

According to an embodiment, the user may utter the user ID and the display apparatus may display the uttered ID in a second UI screen 620 by voice recognition.

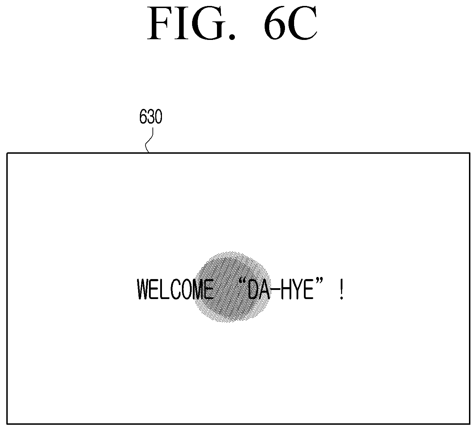

In addition, as illustrated in FIG. 6C according to an embodiment, a third UI screen 630 indicating that an ID of an already authenticated user account and an ID uttered by a user matches may be displayed.

The display apparatus may generate a plurality of utterance sentences based on the obtained information. Further, the generated utterance sentences may be displayed consecutively.

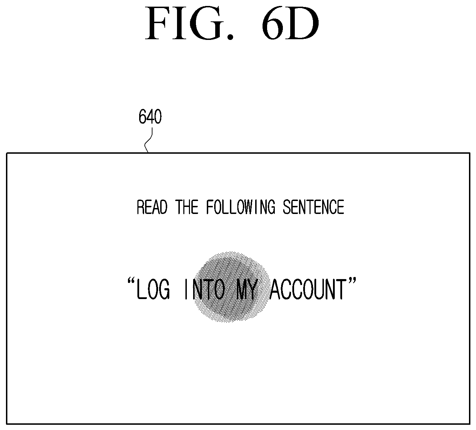

For example, the display apparatus may, as illustrated in FIG. 6D, display a fourth UI screen 640 including an utterance sentences such as "login to my account."

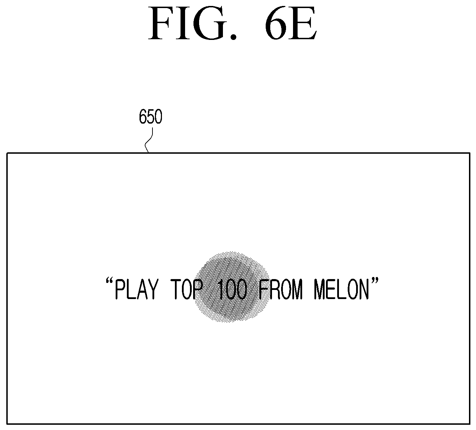

Further, based on a user voice corresponding to the utterance sentence of the fourth UI screen 640 being input, the display apparatus may, as illustrated in FIG. 6E, display a fifth UI screen 650 including an utterance sentence such as "play top 100 from melon."

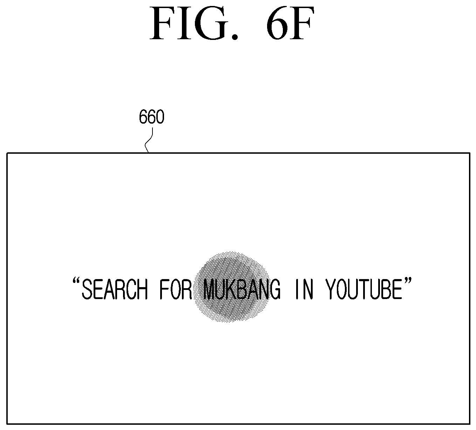

Further, based on a user voice corresponding to an utterance sentence of the fifth UI screen 650 being input, the display apparatus may, as illustrated in FIG. 6F, display a sixth UI screen 660 including an utterance sentence such as "search for mukbang in youtube." The utterance sentences of the fifth UI screen 650 and the sixth UI screen 660 may be utterance sentences generated based on information on a preferred application and content of the user.

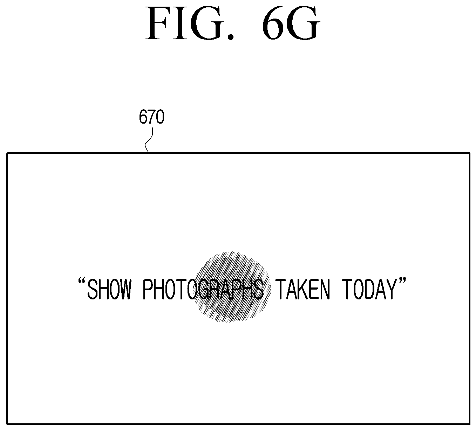

Further, based on a user voice corresponding to an utterance sentence of the sixth UI screen 660 being input, the display apparatus may, as illustrated in FIG. 6G, display a seventh UI screen 670 including an utterance sentence such as "show photographs taken today." The utterance sentence in the seventh UI screen 670 may be an utterance sentence generated based on information on the external apparatus (e.g., smartphone or camera, etc.) coupled with the display apparatus.

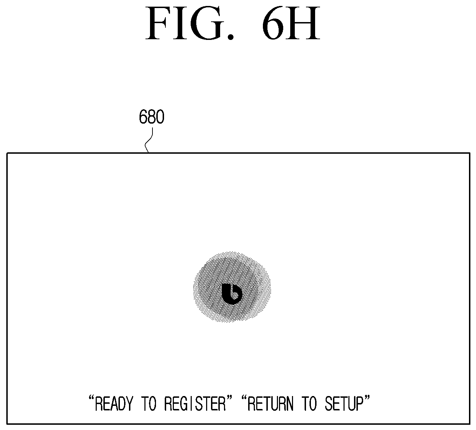

According to an embodiment, the display apparatus may display an eighth UI screen 680 indicating that user voice input has been completed as in FIG. 6H after displaying utterance sentence and receiving user voice has been repeated by a pre-defined number of times.

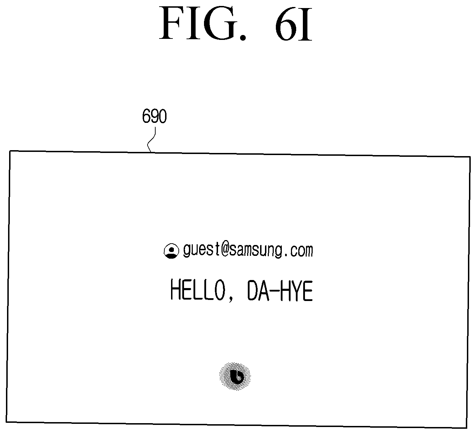

The display apparatus may analyze the input user voice according to the above-described plurality of utterance sentences and obtain information on the user voice, match the obtained voice information to the authenticated user account and store the matched information, and display a ninth UI screen 690 indicating that user voice registration has been completed as in FIG. 6I.

The utterance sentences included in the plurality of UI screens as described above are merely one embodiment, and the number of utterance sentences and order may not be limited to FIGS. 6A to 6I, and a part of the UI screens may be omitted.

FIGS. 7A to 7C are diagrams illustrating an embodiment of feedback being provided when user voice corresponding to an utterance sentence is input.

Referring to FIG. 7A, the display apparatus may display a UI screen 710 guiding user input for user voice registration. The authentication of user account may be in a completed state.

For example, the display apparatus may display a UI screen 70 including a sentence such as "please shout out." Accordingly, when user voice indicating "start" is input, the display apparatus may obtain information on the surrounding environment of the display apparatus and information on the authenticated user.

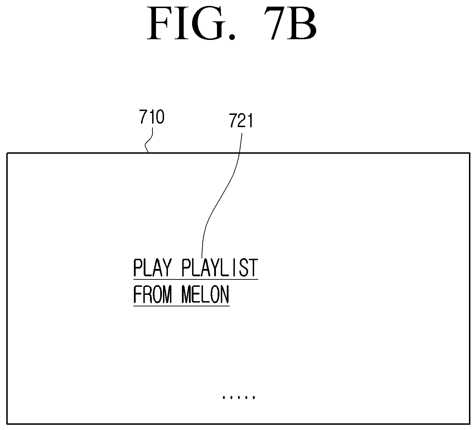

Further, the display apparatus may generate a plurality of utterance sentences based on the obtained information. According to an embodiment, as illustrated in FIG. 7B, the display apparatus may display a UI screen 720 including an utterance sentence 721 such as "play playlist from melon."

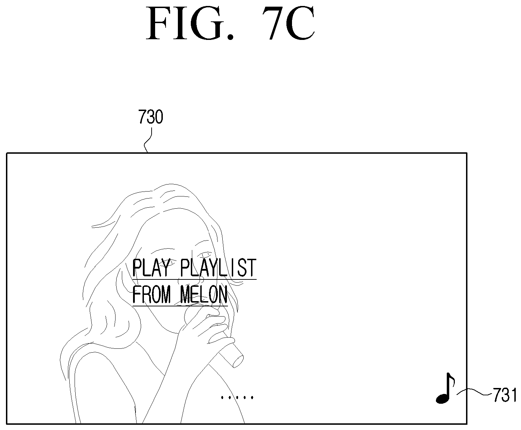

Based on user voice corresponding to the displayed utterance sentence 721 being input, the display apparatus may display a UI screen 730 including visual feedback as illustrated in FIG. 7C. The visual feedback may be a screen related to the utterance sentence 721. According to an embodiment, a screen corresponding to the utterance sentence 721 from stored plurality of screens may be provided as visual feedback. According to still another embodiment, the screen output by inputting the utterance sentence 721 to the artificial intelligence model may be provided as a visual feedback. The artificial intelligence model may be trained to generate a screen according to input text.

The display apparatus may, based on a user voice corresponding to the displayed utterance sentence 721 being input, provide an auditory feedback. The auditory feedback may be sound related to the utterance sentence 721. According to an embodiment, a sound corresponding to the utterance sentence 721 from stored plurality of sounds may be provided as an auditory feedback. According to still another embodiment, the sound output by inputting the utterance sentence 721 to the artificial intelligence model may be provided as an auditory feedback. The artificial intelligence model may be trained to generate sound according to input text. The display apparatus may further display an indicator 731 indicating that auditory feedback is being provided.

Based on user voice input, only the visual feedback or the auditory feedback may be provided or both the visual feedback and the auditory feedback may be provided.

By providing feedback according to user voice input as described above, an effect of raising a cognitive ability of the user and reducing time required by user psychologically may be expected.

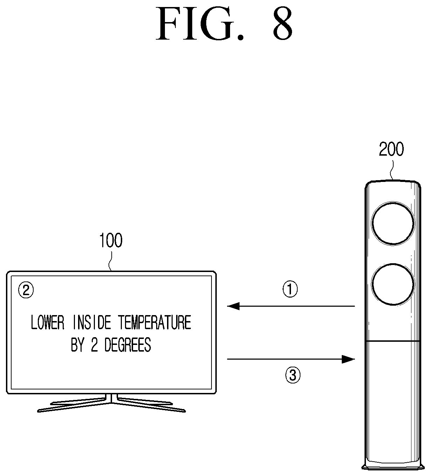

FIG. 8 is a diagram illustrating an embodiment of generating an utterance sentence using received information from an external apparatus.

Referring to FIG. 8, based on the user input for the user voice registration being input, the display apparatus 100 may obtain one or more of information on the external apparatus from the coupled external apparatus 200 and information sensed from the external apparatus (①). According to an embodiment, if the external apparatus 200 is an air conditioner coupled with the display apparatus 100, when user input for user voice registration is received, the display apparatus 100 may obtain an inside temperature sensed by the air conditioner.

The display apparatus 100 may generate an instruction for controlling an air conditioner (i.e., external apparatus 200) based on the temperature information of the inside temperature as an utterance sentence and may display the generated utterance sentence (②). For example, based on the preferred temperature of the user being lower than the inside temperature information received from the air conditioner, which is the external apparatus 200, the display apparatus 100 may generate a control instruction such as "lower inside temperature by two degrees" as an utterance sentence and display the generated sentence.

Further, when the user voice corresponding to the displayed utterance sentence is input, an instruction for controlling the air conditioner, which is the external apparatus 200 according to an embodiment, may transmitted to the air conditioner (③). According to an embodiment, the display apparatus may, when user voice is input, obtain information on the user voice only, and an operation (③) of transmitting a control instruction to the external apparatus 200 may be omitted. The user may, by inputting the same voice command with the utterance sentence displayed after user voice registration, control the external apparatus 200.

FIG. 9 is a sequence diagram illustrating an embodiment of generating an utterance sentence using received information from the external apparatus illustrated in FIG. 8.

The operation (S901) of performing user account authentication of the display apparatus 100 illustrated in FIG. 9 and the operation (S902) of receiving user input for user voice registration are the same as a part of the operations of step S501 and step S502 in FIG. 5, and thus redundant descriptions are omitted.

The display apparatus 100 may, based on receiving user input for user voice registration, request information on the surrounding environment of the coupled external apparatus 200 or information on a search word (S903). If the external apparatus 200 is an electronic apparatus located within a household, the display apparatus 100 may request information on the surrounding environment of the display apparatus 100 to the coupled external apparatus 200, and if the external apparatus 200 is a SNS server, a search portal server, or the like, the display apparatus 100 may request information on the search word to the coupled external apparatus 200.

Accordingly, the external apparatus 200 may obtain information on the surrounding environment of the display apparatus 100 or information on the search word according to a request by the display apparatus 100 (S904). Further, the external apparatus 200 may transmit the obtained information to the display apparatus 100 (S905).

Further, the display apparatus 100 may obtain one or more of information on the surrounding environment of the display apparatus 100 and information on the authenticated user (S906). The obtained information may be information received from the external apparatus 200, information obtained by a sensor provided in the display apparatus 100, or information stored in the memory.

The operation of obtaining an utterance sentence based on obtained information by the display apparatus 100 (S907), the operation of displaying the obtained utterance sentence (S908), the operation of an utterance voice of the user corresponding to the displayed utterance sentence being input (S909), the operation of obtaining voice information on user based on the input utterance voice (S910) and the operation of matching the obtained voice information to the authenticated user account and storing the matched information (S911) may be the same as steps S503 to S506 in FIG. 5, and thus redundant descriptions are omitted.

FIG. 10 is a sequence diagram illustrating an embodiment of generating an utterance sentence in an external apparatus.

The operation of performing user account authentication (S1001), the operation of receiving user input for user voice registration (S1002), the operation of obtaining one or more of information on the surrounding environment of the display apparatus and information of the authenticated user (S1003) of the display apparatus 100 illustrated in FIG. 10 may be the same as the operations of steps S501 and S502 in FIG. 5, and redundant descriptions may are omitted.

The display apparatus 100 may transmit the obtained information to the external apparatus 200 (S1004). The external apparatus 200 may obtain an utterance sentence based on information obtained from the display apparatus 100 (S1005). The utterance sentence obtained by the external apparatus 200 may be in plurality. The external apparatus 200 may select an utterance sentence corresponding to the information received from the display apparatus 100 from stored plurality of utterance sentences, and use the artificial intelligence model stored in the external apparatus 200 to generate and output a text corresponding to the received information.

The external apparatus 200 may transmit an obtained utterance sentence to the display apparatus 100 (S1006).

The display apparatus 100 may then display an utterance sentence received from the external apparatus 200 (S1007).

The operation of an utterance voice of the user corresponding to the displayed utterance sentence in the display apparatus 100 being input (S1008), the operation of obtaining voice information on the user based on the input utterance voice (S1009), and the operation of matching the obtained voice information to the authenticated user account and storing the matched information (S1010) may be the same as in steps S503 to S506 in FIG. 5, and redundant descriptions are omitted.

FIG. 11 is a flowchart illustrating a method of generating an utterance sentence when not connected to a network. FIG. 11 illustrates an embodiment in which obtaining information on the surrounding environment of the display apparatus and information on the authenticated user is difficult at a time when a user instruction is input, even when user instruction for user voice registration is input, as the display apparatus is not connected to the network.

Referring to FIG. 11, the display apparatus may display a main menu or function sentence provided in the display apparatus (S1101). For example, based on user instruction for user voice registration being input, the display apparatus may generate an instruction for executing a main menu or function such as "execute menu" as an utterance sentence, and display the sentence.

When the user utters a voice corresponding to the displayed utterance sentence (S1102), the display apparatus may execute the relevant menu (S1103). For example, the display apparatus may, when the utterance voice of the user such as "execute menu" is input, execute the menu provided in the display apparatus and display a screen in which the menu has been executed.

The display apparatus may display a sub menu or a function sentence (S1104). For example, the display apparatus may, in a state in which the menu is executed, generate an utterance sentence such as "execute adjusting screen brightness" related to adjusting screen brightness, which is a sub menu function of a main menu function. The sub menu or function generated to an utterance sentence may be a sub menu or function frequently used by the user from a main menu or function.

Based on a voice corresponding to the displayed utterance sentence being uttered by the user (S1105), the display apparatus may then execute the relevant menu (S1106). For example, the display apparatus may, based on the utterance voice of the user such as "execute adjusting screen brightness" being input, display a screen for adjusting screen brightness in the display apparatus.

The operation for generating the utterance sentence and inputting user voice may be repeated by a pre-defined number of times necessary in obtaining the voice information of the user. For example, the display apparatus may identify whether an operation of generating an utterance sentence and inputting user voice has been repeated by N-times, which is a pre-defined number of times (S1107), and based on input being repeated N-times(S1107-Y), complete the operation for user voice registration. However, if input has not been repeated N-times (S1107-N), return back to step S1101. The operations of S1101 to S113 according to an embodiment may be performed only once, and the operations of S1101 to S1106 may be performed only once.

According to the various above-described embodiments of the disclosure, as described above, by providing an utterance sentence according to circumstance at the time of user voce registration, user concentration may be raised and time required for obtaining the user's speech may be reduced in the speaker registration process for speaker recognition. Thus, the user may feel that the speech recognition process is minimally invasive and may feel that the speech recognition and registration process is less burdensome.

The term "part" or "module" used in the disclosure may include a unit implemented with hardware, software, or firmware, and may be interchangeably used with terms, for example, logic, logic blocks, components, circuits, or the like. The "part" or "module" may be a component integrally formed or a minimum unit or a part thereof performing one or more functions. For example, the module may be implemented in the form of an application-specific integrated circuit (ASIC).

The various embodiments of the disclosure may be implemented with software including one or more instructions stored in a machine-readable storage media (e.g., computer). The machine may, as an apparatus capable of calling one or more stored instructions from the storage medium and operating according to the called instruction, include an electronic apparatus (e.g., display apparatus 100) according to the disclosed embodiments. Based on the instructions being executed by the processor, the processor may directly, or using other components under the control of the processor perform functions according to the instructions. The instructions may include a code generated by a compiler or executed by an interpreter. The storage medium readable by a machine may be provided in the form of a non-transitory storage medium. The "non-temporary" may merely mean that the storage medium is tangible and does not include a signal, and does not distinguish that data is permanently or temporarily stored in the storage medium.

According to an embodiment, the method according to the various embodiments disclosed herein may be provided in a computer program product. The computer program product may be exchanged between a seller and a purchaser as a commodity. The computer program product may be distributed in the form of a machine-readable storage medium (e.g., compact disc read only memory (CD-ROM)) or distributed online through an application store (e.g. PlayStore ^{™}). In the case of on-line distribution, at least a portion of the computer program product may be stored temporarily or at least temporarily in a storage medium such as a manufacturer's server, a server of an application store, or a memory of a relay server, or temporarily generated.

Each of the elements (e.g., a module or a program) according to the various embodiments may be composed of a single entity or a plurality of entities, and some sub-elements of the abovementioned sub-elements may be omitted or other sub-elements may be further included in the various embodiments. Alternatively or additionally, some elements (e.g., modules or programs) may be integrated into one entity to perform the same or similar functions performed by each respective element prior to integration. Operations performed by a module, program, or other elements, in accordance with the various embodiments, may be performed consecutively, in a parallel, repetitively, or in a heuristically manner.

## Claims

1. A display apparatus (100) comprising:
a display (110);
a voice input receiver (120);
a memory (130) storing at least one instruction; and
a processor (140) which when executing the at least one instruction is configured to control to:
perform a user account authentication of a user of the display apparatus;
based on a user input for user voice registration of the user being received, obtain information on a surrounding environment of the display apparatus and information on the user;
obtain an utterance sentence, for guiding a voice input to register voice of the authenticated user, based on the information on the surrounding environment of the display apparatus and the information on the user;
control the display (110) to display the utterance sentence;
based on an utterance voice of the user corresponding to the utterance sentence being received through the voice input receiver, obtain voice information of the user based on the utterance voice of the user; and
store, by matching the voice information to the authenticated user account of the user, the voice information in the memory,
wherein the information on the surrounding environment includes at least one of country in which the display apparatus is located, location the display apparatus is disposed or environmental information of space in which the display apparatus is disposed,
wherein the environmental information includes at least one of illuminance, temperature, humidity, or color temperature of the space, and
wherein the information on the user includes at least one of preferred applications, preferred content or nationality of the authenticated user.

2. The display apparatus (100) of claim 1, further comprising:
a sensor (150) configured to sense the information on the surrounding environment of the display apparatus,
wherein the processor (140) when executing the at least one instruction is further configured to obtain an instruction for controlling the display apparatus based on the information on the surrounding environment of the display apparatus sensed by the sensor as the utterance sentence.

3. The display apparatus (100) of any one of claim 1 to 2, further comprising:
a communication interface (160),
wherein the processor (140) when executing the at least one instruction is further configured to:
obtain information on an external apparatus or information sensed by the external apparatus as the information on the surrounding environment of the display apparatus from the external apparatus connected to the display apparatus through the communication interface and
obtain an instruction for controlling the external apparatus based on the information on the external apparatus as the utterance sentence.

4. The display apparatus (100) of any one of claim 1 to 2, further comprising:
a communication interface (160),
wherein the processor (140) when executing the at least one instruction is further configured to:
transmit the information on the surrounding environment of the display apparatus and the information on the user to an external server through the communication interface, and
receive the utterance sentence corresponding to the information on the surrounding environment of the display apparatus and the information on the user from the external server through the communication interface.

5. The display apparatus (100) of any one of claim 1 to 4, wherein the processor (140) when executing the at least one instruction is further configured to:
obtain the preferred application or the preferred content of the user based on a use history of the user stored in the memory as the information of the user, and
obtain the utterance sentence to include the preferred application or the preferred content.

6. The display apparatus (100) of any one of claim 1 to 2, further comprising:
a communication interface (160),
wherein the processor (140) when executing the at least one instruction is further configured to:
based on a control instruction for the user voice registration of the user being received, receive information on a search word of which increased number of searches from an external server is equal to or greater than a pre-defined value through the communication interface, and
obtain the utterance sentence to include the search word.

7. The display apparatus (100) of any one of claim 1 to 6, wherein the processor (140) when executing the at least one instruction is further configured to:
obtain a plurality of utterance sentences based on the information on the surrounding environment of the display apparatus and the information on the user, and
based on user voice corresponding to the utterance sentence being received, control the display to display a new utterance sentence different from the utterance sentence from among the plurality of utterance sentences.

8. The display apparatus (100) of any one of claim 1 to 7, wherein the memory (130) is further configured to store an artificial intelligence model,
wherein the processor (140) when executing the at least one instruction is further configured to:
input the information on the surrounding environment of the display apparatus and the information on the user to the artificial intelligence model, and
obtain a text output from the artificial intelligence model as the utterance sentence, and
wherein the artificial intelligence model is configured to predict a function to be executed by the user based on the information on the surrounding environment of the display apparatus and the information on the user and the artificial intelligence model is trained to obtain an instruction for performing the function as the utterance sentence.

9. The display apparatus (100) of any one of claim 1 to 8, wherein the processor when executing the at least one instruction is further configured to, based on the utterance voice of the user being received through the voice input receiver (120), provide one or more of a visual feedback and an auditory feedback related to the utterance sentence.

10. The display apparatus (100) of any one of claim 1 to 9, wherein the processor (140) when executing the at least one instruction is further configured to, based the display apparatus being disconnected from a network, obtain an instruction for executing a function provided in the display apparatus as the utterance sentence.

11. A method of controlling a display apparatus (100), the method comprising:
performing a user account authentication of a user of the display apparatus;
based on a control instruction for a user voice registration of the user being input, obtaining both information on a surrounding environment of the display apparatus and information on the user;
obtaining an utterance sentence, for guiding a voice input to register voice of the authenticated user sentence, based on the information on the surrounding environment of the display apparatus and the information on the user;
displaying the utterance sentence;
based on an utterance voice of the user corresponding to the utterance sentence being received, obtaining voice information on the user based on the utterance voice of the user; and
store, by matching the voice information to the authenticated user account of the user, the voice information in the memory,
wherein the information on the surrounding environment includes at least one of country in which the display apparatus is located, location the display apparatus is disposed or environmental information of space in which the display apparatus is disposed,
wherein the environmental information includes at least one of illuminance, temperature, humidity, or color temperature of the space, and
wherein the information on the user includes at least one of preferred applications, preferred content or nationality of the authenticated user.

12. The method of claim 11, wherein the obtaining comprises sensing the surrounding environment of the display apparatus (100) by a sensor of the display apparatus, and
the obtaining comprises obtaining an instruction for controlling the display apparatus based on the information on the surrounding environment of the display apparatus as the utterance sentence.

13. The method of any one of claim 11 to 12, wherein the obtaining comprises obtaining information on an external apparatus or information sensed by the external apparatus from the external apparatus connected to the display apparatus (100) as the information on the surrounding environment of the display apparatus, and
the obtaining comprises obtaining an instruction for controlling the external apparatus based on the information on the external apparatus as the utterance sentence.

14. The method of any one of claim 11 to 12, the method further comprising:
transmitting the information on the surrounding environment of the display apparatus (100) and the information on the user to an external server; and
receiving the utterance sentence corresponding to the information on the surrounding environment of the display apparatus and the information on the user from the external server.

15. The method of any one of claim 11 to 14, wherein the obtaining comprises obtaining the preferred application or the preferred content of the user based on a use history of the user as information of the user, and
the obtaining comprises obtaining the utterance sentence to include with the preferred application or the preferred content.

## Patentansprüche

1. Anzeigevorrichtung (100), umfassend:
eine Anzeige (110);
einen Spracheingabeempfänger (120);
einen Speicher (130), der mindestens eine Anweisung speichert; und
einen Prozessor (140), der beim Ausführen der mindestens einen Anweisung dazu konfiguriert ist, Folgendes zu steuern:
Durchführen einer Benutzerkontenauthentifizierung eines Benutzers der Anzeigevorrichtung;
Erhalten von Informationen über eine umliegende Umgebung der Anzeigevorrichtung und Informationen über den Benutzer auf Grundlage davon, dass eine Benutzereingabe zur Benutzerstimmenregistrierung des Benutzers empfangen wird;
Erhalten eines Äußerungssatzes zum Anleiten einer Spracheingabe, um die Stimme des authentifizierten Benutzers zu registrieren, auf Grundlage der Informationen über die umliegende Umgebung der Anzeigevorrichtung und der Informationen über den Benutzer;
Steuern der Anzeige (110), um den Äußerungssatz anzuzeigen;
Erhalten von Stimminformationen des Benutzers auf Grundlage einer Äußerungsstimme des Benutzers auf Grundlage davon, dass die Äußerungsstimme des Benutzers dem Äußerungssatz entspricht, der über den Spracheingabeempfänger empfangen wird; und
Speichern der Stimminformationen auf dem Speicher durch Abgleichen der Stimminformationen mit dem authentifizierten Benutzerkonto des Benutzers,
wobei die Informationen über die umliegende Umgebung mindestens eines von Folgenden beinhalten: einem Land, in dem sich die Anzeigevorrichtung befindet, einem Standort, an dem die Anzeigevorrichtung angeordnet ist, oder Umgebungsinformationen über einen Raum, in dem die Anzeigevorrichtung angeordnet ist,
wobei die Umgebungsinformationen mindestens eines von einer Beleuchtungsstärke, Temperatur, Feuchtigkeit oder Farbtemperatur des Raums beinhalten und
wobei die Informationen über den Benutzer mindestens eines von bevorzugten Anwendungen, einem bevorzugten Inhalt oder einer Nationalität des authentifizierten Benutzers beinhalten.

2. Anzeigevorrichtung (100) nach Anspruch 1, ferner umfassend:
einen Sensor (150), der dazu konfiguriert ist, die Informationen über die umliegende Umgebung der Anzeigevorrichtung zu erfassen,
wobei der Prozessor (140) beim Ausführen der mindestens einen Anweisung ferner dazu konfiguriert ist, eine Anweisung zum Steuern der Anzeigevorrichtung auf Grundlage der Informationen über die umliegende Umgebung der Anzeigevorrichtung zu erhalten, die durch den Sensor als der Äußerungssatz erfasst wird.

3. Anzeigevorrichtung (100) nach einem der Ansprüche 1 bis 2, ferner umfassend:
eine Kommunikationsschnittstelle (160),
wobei der Prozessor (140) beim Ausführen der mindestens einen Anweisung ferner zu Folgendem konfiguriert ist:
Erhalten von Informationen über eine externe Vorrichtung oder von Informationen, die durch die externe Vorrichtung als die Informationen über die umliegende Umgebung der Anzeigevorrichtung erfasst werden, von der externen Vorrichtung, die über die Kommunikationsschnittstelle mit der Anzeigevorrichtung verbunden ist, und
Erhalten einer Anweisung zum Steuern der externen Vorrichtung auf Grundlage der Informationen über die externe Vorrichtung als den Äußerungssatz.

4. Anzeigevorrichtung (100) nach einem der Ansprüche 1 bis 2, ferner umfassend:
eine Kommunikationsschnittstelle (160),
wobei der Prozessor (140) beim Ausführen der mindestens einen Anweisung ferner zu Folgendem konfiguriert ist:
Übertragen der Informationen über die umliegende Umgebung der Anzeigevorrichtung und der Informationen über den Benutzer über die Kommunikationsschnittstelle an einen externen Server und
Empfangen des Äußerungssatzes, der den Informationen über die umliegende Umgebung der Anzeigevorrichtung und den Informationen über den Benutzer entspricht, von dem externen Server über die Kommunikationsschnittstelle.

5. Anzeigevorrichtung (100) nach einem der Ansprüche 1 bis 4, wobei der Prozessor (140) beim Ausführen der mindestens einen Anweisung ferner zu Folgendem konfiguriert ist:
Erhalten der bevorzugten Anwendung oder des bevorzugten Inhalts des Benutzers auf Grundlage eines auf dem Speicher gespeicherten Nutzungsverlaufs des Benutzers als die Information des Benutzers und
Erhalten des Äußerungssatzes, um die bevorzugte Anwendung oder den bevorzugten Inhalt einzuschließen.

6. Anzeigevorrichtung (100) nach einem der Ansprüche 1 bis 2, ferner umfassend:
eine Kommunikationsschnittstelle (160),
wobei der Prozessor (140) beim Ausführen der mindestens einen Anweisung ferner zu Folgendem konfiguriert ist:
Empfangen von Informationen über ein Suchwort, dessen erhöhte Anzahl von Suchen von einem externen Server gleich einem vordefinierten Wert oder größer als dieser ist, über die Kommunikationsschnittstelle auf Grundlage einer Steueranweisung für die Benutzerstimmenregistrierung des Benutzers und
Erhalten des Äußerungssatzes, um das Suchwort einzuschließen.

7. Anzeigevorrichtung (100) nach einem der Ansprüche 1 bis 6, wobei der Prozessor (140) beim Ausführen der mindestens einen Anweisung ferner zu Folgendem konfiguriert ist:
Erhalten einer Vielzahl von Äußerungssätzen auf Grundlage der Informationen über die umliegende Umgebung der Anzeigevorrichtung und der Informationen über den Benutzer und
Steuern der Anzeige, um einen neuen Äußerungssatz, der sich von dem Äußerungssatz unterscheidet, aus der Vielzahl von Äußerungssätzen anzuzeigen, auf Grundlage davon, dass die Benutzerstimme dem Äußerungssatz entspricht, der empfangen wird.

8. Anzeigevorrichtung (100) nach einem der Ansprüche 1 bis 7, wobei der Speicher (130) ferner dazu konfiguriert ist, ein Modell künstlicher Intelligenz zu speichern,
wobei der Prozessor (140) beim Ausführen der mindestens einen Anweisung ferner zu Folgendem konfiguriert ist:
Eingeben der Informationen über die umliegende Umgebung der Anzeigevorrichtung und der Informationen über den Benutzer in das Modell künstlicher Intelligenz und
Erhalten einer Textausgabe von dem Modell künstlicher Intelligenz als den Äußerungssatz und
wobei das Modell künstlicher Intelligenz dazu konfiguriert ist, eine durch den Benutzer auszuführende Funktion auf Grundlage der Informationen über die umliegende Umgebung der Anzeigevorrichtung und der Informationen über den Benutzer vorherzusagen, und das Modell künstlicher Intelligenz dazu trainiert ist, eine Anweisung zum Durchführen der Funktion als den Äußerungssatz zu erhalten.

9. Anzeigevorrichtung (100) nach einem der Ansprüche 1 bis 8, wobei der Prozessor beim Ausführen der mindestens einen Anweisung ferner dazu konfiguriert ist, auf Grundlage der Äußerungsstimme des Benutzers, die über den Spracheingabeempfänger (120) empfangen wird, eines oder mehrere von einem visuellen Feedback und einem akustischen Feedback in Bezug auf den Äußerungssatz bereitzustellen.

10. Anzeigevorrichtung (100) nach einem der Ansprüche 1 bis 9, wobei der Prozessor (140) beim Ausführen der mindestens einen Anweisung ferner dazu konfiguriert ist, auf Grundlage davon, dass die Anzeigevorrichtung von einem Netzwerk getrennt ist, eine Anweisung zum Ausführen einer Funktion, die in der Anzeigevorrichtung als der Äußerungssatz bereitgestellt wird, zu erhalten.

11. Verfahren zur Steuerung einer Anzeigevorrichtung (100), wobei das Verfahren Folgendes umfasst:
Durchführen einer Benutzerkontenauthentifizierung eines Benutzers der Anzeigevorrichtung;
Erhalten sowohl von Informationen über eine umliegende Umgebung der Anzeigevorrichtung als auch von Informationen über den Benutzer auf Grundlage einer Steueranweisung für eine Benutzerstimmenregistrierung des Benutzers, die eingegeben wird;
Erhalten eines Äußerungssatzes zum Anleiten einer Spracheingabe, um die Stimme des authentifizierten Benutzersatzes zu registrieren, auf Grundlage der Informationen über die umliegende Umgebung der Anzeigevorrichtung und der Informationen über den Benutzer;
Anzeigen des Äußerungssatzes;
Erhalten von Stimminformationen über den Benutzer auf Grundlage einer Äußerungsstimme des Benutzers auf Grundlage davon, dass die Äußerungsstimme des Benutzers dem Äußerungssatz entspricht, der empfangen wird; und
Speichern der Stimminformationen auf dem Speicher durch Abgleichen der Stimminformationen mit dem authentifizierten Benutzerkonto des Benutzers,
wobei die Informationen über die umliegende Umgebung mindestens eines von Folgenden beinhalten: einem Land, in dem sich die Anzeigevorrichtung befindet, einem Standort, an dem die Anzeigevorrichtung angeordnet ist, oder Umgebungsinformationen über einen Raum, in dem die Anzeigevorrichtung angeordnet ist,
wobei die Umgebungsinformationen mindestens eines von einer Beleuchtungsstärke, Temperatur, Feuchtigkeit oder Farbtemperatur des Raums beinhalten und
wobei die Informationen über den Benutzer mindestens eines von bevorzugten Anwendungen, einem bevorzugten Inhalt oder einer Nationalität des authentifizierten Benutzers beinhalten.

12. Verfahren nach Anspruch 11, wobei das Erhalten Erfassen der umliegenden Umgebung der Anzeigevorrichtung (100) durch einen Sensor der Anzeigevorrichtung umfasst und
das Erhalten Erhalten einer Anweisung zum Steuern der Anzeigevorrichtung auf Grundlage der Informationen über die umliegende Umgebung der Anzeigevorrichtung als den Äußerungssatz umfasst.

13. Verfahren nach einem der Ansprüche 11 bis 12, wobei das Erhalten Erhalten von Informationen über eine externe Vorrichtung oder von Informationen, die durch die externe Vorrichtung erfasst werden, von der externen Vorrichtung, die mit dem Anzeigevorrichtung (100) verbunden ist, als die Informationen über die umliegende Umgebung der Anzeigevorrichtung umfasst und
das Erhalten Erhalten einer Anweisung zum Steuern der externen Vorrichtung auf Grundlage der Informationen über die externe Vorrichtung als den Äußerungssatz umfasst.

14. Verfahren nach einem der Ansprüche 11 bis 12, wobei das Verfahren ferner Folgendes umfasst:
Übertragen der Informationen über die umliegende Umgebung der Anzeigevorrichtung (100) und der Informationen über den Benutzer an einen externen Server; und
Empfangen des Äußerungssatzes, der den Informationen über die umliegende Umgebung der Anzeigevorrichtung und den Informationen über den Benutzer entspricht, von dem externen Server.

15. Verfahren nach einem der Ansprüche 11 bis 14, wobei das Erhalten Erhalten der bevorzugten Anwendung oder des bevorzugten Inhalts des Benutzers auf Grundlage eines Nutzungsverlaufs des Benutzers als Informationen des Benutzers umfasst und
das Erhalten Erhalten des Äußerungssatzes umfasst, um die bevorzugte Anwendung oder den bevorzugten Inhalt einzuschließen.

## Revendications

1. Appareil d'affichage (100) comprenant :
un dispositif d'affichage (110) ;
un récepteur de saisie vocale (120) ;
une mémoire (130) stockant au moins une instruction ; et
un processeur (140) qui, lors de l'exécution de l'au moins une instruction, est configuré pour commander de :
réaliser une authentification de compte d'utilisateur d'un utilisateur de l'appareil d'affichage ;
sur la base de la réception d'une saisie utilisateur pour un enregistrement vocal de l'utilisateur, obtenir des informations sur un environnement environnant de l'appareil d'affichage et des informations sur l'utilisateur ;
obtenir une phrase d'énoncé, destinée à guider une saisie vocale pour enregistrer la voix de l'utilisateur authentifié, sur la base des informations sur l'environnement environnant de l'appareil d'affichage et des informations sur l'utilisateur ;
commander au dispositif d'affichage (110) d'afficher la phrase d'énoncé ;
sur la base de la correspondance d'une voix d'énoncé de l'utilisateur avec la phrase d'énoncé reçue au travers du récepteur de saisie vocale, obtenir des informations vocales de l'utilisateur sur la base de la voix d'énoncé de l'utilisateur ; et
stocker, en mettant en correspondance les informations vocales avec le compte utilisateur authentifié de l'utilisateur, les informations vocales dans la mémoire, dans lequel les informations sur l'environnement environnant comprennent au moins un élément parmi le pays où l'appareil d'affichage est situé, l'emplacement où l'appareil d'affichage est disposé ou des informations environnementales d'un espace où l'appareil d'affichage est disposé,
dans lequel les informations environnementales comprennent au moins l'un de l'éclairement, de la température, de l'humidité ou de la température de couleur de l'espace, et
dans lequel les informations sur l'utilisateur comprennent au moins un élément parmi des applications préférées, un contenu préféré ou une nationalité de l'utilisateur authentifié.

2. Appareil d'affichage (100) de la revendication 1, comprenant en outre :
un capteur (150) configuré pour détecter les informations sur l'environnement environnant de l'appareil d'affichage,
dans lequel le processeur (140), lors de l'exécution de l'au moins une instruction, est en outre configuré pour obtenir une instruction destinée à commander l'appareil d'affichage sur la base des informations sur l'environnement environnant de l'appareil d'affichage détectées par le capteur en tant que phrase d'énoncé.

3. Appareil d'affichage (100) de l'une quelconque des revendications 1 à 2, comprenant en outre :
une interface de communication (160),
dans lequel le processeur (140), lors de l'exécution de l'au moins une instruction, est en outre configuré pour :
obtenir des informations sur un appareil externe ou des informations détectées par l'appareil externe en tant qu'informations sur l'environnement environnant de l'appareil d'affichage à partir de l'appareil externe connecté à l'appareil d'affichage au travers de l'interface de communication et
obtenir une instruction destinée à commander l'appareil externe sur la base des informations sur l'appareil externe en tant que phrase d'énoncé.

4. Appareil d'affichage (100) de l'une quelconque des revendications 1 à 2, comprenant en outre :
une interface de communication (160),
dans lequel le processeur (140), lors de l'exécution de l'au moins une instruction, est en outre configuré pour :
transmettre les informations sur l'environnement environnant de l'appareil d'affichage et les informations sur l'utilisateur à un serveur externe au travers de l'interface de communication, et
recevoir la phrase d'énoncé correspondant aux informations sur l'environnement environnant de l'appareil d'affichage et les informations sur l'utilisateur à partir du serveur externe au travers de l'interface de communication.

5. Appareil d'affichage (100) de l'une quelconque des revendications 1 à 4, dans lequel le processeur (140), lors de l'exécution de l'au moins une instruction, est en outre configuré pour :
obtenir l'application préférée ou le contenu préféré de l'utilisateur sur la base d'un historique d'utilisation de l'utilisateur stocké dans la mémoire en tant qu'informations de l'utilisateur, et
obtenir la phrase d'énoncé devant comprendre l'application préférée ou le contenu préféré.

6. Appareil d'affichage (100) de l'une quelconque des revendications 1 à 2, comprenant en outre :
une interface de communication (160),
dans lequel le processeur (140), lors de l'exécution de l'au moins une instruction, est en outre configuré pour :
sur la base de la réception d'une instruction de commande pour l'enregistrement vocal de l'utilisateur, recevoir des informations sur un mot de recherche dont le nombre accru de recherches à partir d'un serveur externe est supérieur ou égal à une valeur prédéfinie au travers de l'interface de communication, et
obtenir la phrase d'énoncé devant comprendre le mot de recherche.

7. Appareil d'affichage (100) de l'une quelconque des revendications 1 à 6, dans lequel le processeur (140), lors de l'exécution de l'au moins une instruction, est en outre configuré pour :
obtenir une pluralité de phrases d'énoncé sur la base des informations sur l'environnement environnant de l'appareil d'affichage et des informations sur l'utilisateur, et
sur la base de la correspondance de la voix de l'utilisateur avec la phrase d'énoncé reçue, commander à l'affichage d'afficher une nouvelle phrase d'énoncé différente de la phrase d'énoncé parmi la pluralité de phrases d'énoncé.

8. Appareil d'affichage (100) de l'une quelconque des revendications 1 à 7, dans lequel la mémoire (130) est en outre configurée pour stocker un modèle d'intelligence artificielle,
dans lequel le processeur (140), lors de l'exécution de l'au moins une instruction, est en outre configuré pour :
saisir les informations sur l'environnement environnant de l'appareil d'affichage et les informations sur l'utilisateur dans le modèle d'intelligence artificielle, et
obtenir une sortie de texte du modèle d'intelligence artificielle en tant que phrase d'énoncé, et
dans lequel le modèle d'intelligence artificielle est configuré pour prédire une fonction devant être exécutée par l'utilisateur sur la base des informations sur l'environnement environnant de l'appareil d'affichage et des informations sur l'utilisateur, et le modèle d'intelligence artificielle est formé pour obtenir une instruction pour exécuter la fonction en tant que phrase d'énoncé.

9. Appareil d'affichage (100) de l'une quelconque des revendications 1 à 8, dans lequel le processeur, lors de l'exécution de l'au moins une instruction, est en outre configuré pour, sur la base de la réception de la voix d'énoncé de l'utilisateur au travers du récepteur de saisie vocale (120), fournir une ou plusieurs informations parmi une rétroaction visuelle et une rétroaction auditive liées à la phrase d'énoncé.

10. Appareil d'affichage (100) de l'une quelconque des revendications 1 à 9, dans lequel le processeur (140), lors de l'exécution de l'au moins une instruction, est en outre configuré pour, sur la base d'une déconnexion de l'appareil d'affichage d'un réseau, obtenir une instruction destinée à exécuter une fonction fournie dans l'appareil d'affichage en tant que phrase d'énoncé.

11. Procédé de commande d'un appareil d'affichage (100), le procédé comprenant :
la réalisation d'une authentification de compte d'utilisateur d'un utilisateur de l'appareil d'affichage ;
sur la base de la saisie d'une instruction de commande pour un enregistrement vocal de l'utilisateur, l'obtention à la fois d'informations sur un environnement environnant de l'appareil d'affichage et d'informations sur l'utilisateur ;
l'obtention d'une phrase d'énoncé, destinée à guider une saisie vocale pour enregistrer la voix de l'utilisateur authentifié, sur la base des informations sur l'environnement environnant de l'appareil d'affichage et des informations sur l'utilisateur ;
l'affichage de la phrase d'énoncé ;
sur la base de la correspondance d'une voix d'énoncé de l'utilisateur à la phrase d'énoncé reçue, l'obtention d'informations vocales sur l'utilisateur sur la base de la voix d'énoncé de l'utilisateur ; et
le stockage, en mettant en correspondance les informations vocales avec le compte utilisateur authentifié de l'utilisateur, des informations vocales dans la mémoire,
dans lequel les informations sur l'environnement environnant comprennent au moins un élément parmi le pays où l'appareil d'affichage est situé, l'emplacement où l'appareil d'affichage est disposé ou des informations environnementales d'un espace où l'appareil d'affichage est disposé,
dans lequel les informations environnementales comprennent au moins l'un de l'éclairement, de la température, de l'humidité ou de la température de couleur de l'espace, et
dans lequel les informations sur l'utilisateur comprennent au moins un élément parmi des applications préférées, un contenu préféré ou une nationalité de l'utilisateur authentifié.

12. Procédé de la revendication 11, dans lequel l'obtention comprend la détection de l'environnement environnant de l'appareil d'affichage (100) par un capteur de l'appareil d'affichage, et
l'obtention comprend l'obtention d'une instruction destinée à commander l'appareil d'affichage sur la base des informations sur l'environnement environnant de l'appareil d'affichage en tant que phrase d'énoncé.

13. Procédé de l'une quelconque des revendications 11 à 12, dans lequel l'obtention comprend l'obtention d'informations sur un appareil externe ou d'informations détectées par l'appareil externe à partir de l'appareil externe connecté à l'appareil d'affichage (100) en tant qu'informations sur l'environnement environnant de l'appareil d'affichage, et
l'obtention comprend l'obtention d'une instruction destinée à commander l'appareil externe sur la base des informations sur l'appareil externe en tant que phrase d'énoncé.

14. Procédé de l'une quelconque des revendications 11 à 12, le procédé comprenant en outre :
la transmission des informations sur l'environnement environnant de l'appareil d'affichage (100) et des informations sur l'utilisateur à un serveur externe ; et
la réception de la phrase d'énoncé correspondant aux informations sur l'environnement environnant de l'appareil d'affichage et des informations sur l'utilisateur à partir du serveur externe.

15. Procédé de l'une quelconque des revendications 11 à 14, dans lequel l'obtention comprend l'obtention de l'application préférée ou du contenu préféré de l'utilisateur sur la base d'un historique d'utilisation de l'utilisateur en tant qu'informations de l'utilisateur, et
l'obtention comprend l'obtention de la phrase d'énoncé à comprendre avec l'application préférée ou le contenu préféré.
